# EUROPEAN PATENT SPECIFICATION

(11) **EP 2 911 868 B1**
(45) Date of publication and mention of the grant of the patent: **07.12.2016**
(21) Application number: 13821947.2
(22) Date of filing: 21.10.2013
(51) Int. Cl.: B29D 19/04, B24B 19/00

(54) **MACHINE FOR GRINDING BUTTONS**
MASCHINE ZUM SCHLEIFEN VON KNÖPFEN
MACHINE POUR MEULER DES BOUTONS

(30) Priority: 25.10.2012 IT MI20121816
(43) Date of publication of application: 02.09.2015
(73) Proprietor: Tullio Giusi S.p.a., 24064 Grumello Del Monte (bg) (IT)
(72) Inventor: CAVALOTTI, Michele, I-25036 Palazzolo Sull'oglio (BS) (IT)
(74) Representative: Ottazzo, Marco Francesco Agostino
(86) International application number: PCT/IB2013/059507
(87) International publication number: WO 2014/064598

(56) References cited:
- EP-A1- 0 554 506
- DE-A1- 2 446 791
- DE-C- 615 765
- DE-C- 732 672

## Description

The present invention refers in general to a machine for manufacturing buttons and, more in particular, to a machine that is capable of grinding the semi-finished components from which buttons are obtained.

As it is known, buttons are normally manufactured on machinery provided with tools that are capable of rotating and/or translating with respect to an initial semi-finished product, which is held by a special clamp device, so as to obtain the shape of the button and the number of holes desired. The initial semi-finished product, generally cylindrical, is called a disc-shaped element.

Buttons can be manufactured starting from a large variety of materials, as long as they are sufficiently solid, like for example wood, metal, bone, mother-of-pearl, horn, ivory or plastic materials in general.

The production of buttons, especially those manufactured from precious materials such as horn, mother-of-pearl or ivory, leads to some drawbacks due to the fact that the initial disc-shaped elements may vary greatly in diameter.

Currently, the manufacturing of the disc-shaped elements from which the buttons are obtained can be carried out according to two distinct machining cycles.

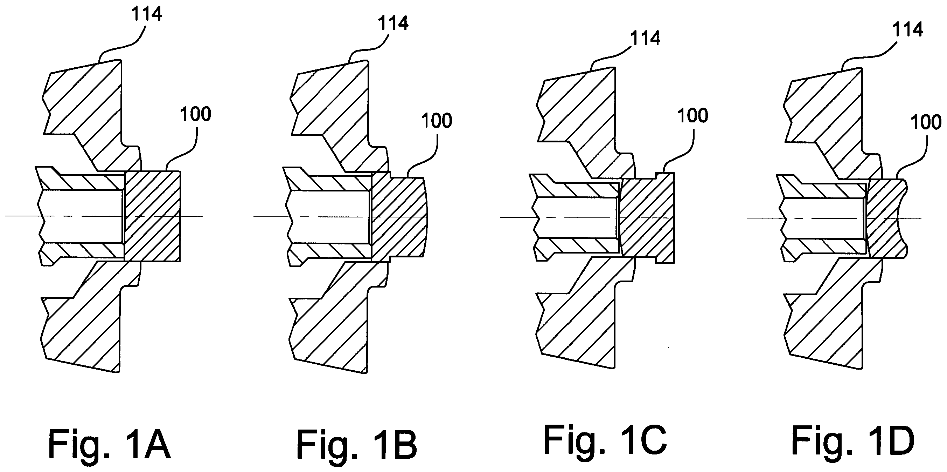

According to a first machining cycle, carried out on conventional machines and illustrated in the attached figures 1A-1D, after the disc-shaped element 100 has been loaded onto a special clamp 114 (figure 1A), a tool (not shown) carries out a first turning operation through which grinding and shaping operations of one side of the disc-shaped element 100 (figure 1B) are simultaneously carried out. Subsequently, the disc-shaped element 100 must be inverted (figure 1C), so as to be able to be machined on its opposite side by the tool in an analogous manner as what has been described above (figure 1D). Possibly, further machining can be carried out subsequent to and/or interposed between the machining steps mentioned above, like for example the perforation or the formation of bulges or concavities on the disc-shaped element 100.

This machining method however leads to some drawbacks. The loading of the disc-shaped elements 100 onto the processing machine firstly has difficulties due to the inhomogeneity of the diameters of the disc-shaped elements 100 themselves.

In addition, the machining cycle generates a waste of material, due to the fact that it is not possible to carry out the complete grinding of the disc-shaped element 100 in a single operative step. Since the disc-shaped element 100 must necessarily be gripped on the outer diameter by the clamp 114, it is indeed necessary to invert the disc-shaped element 100 itself in order to remove the part of material that was not possible to grind in the first operative step.

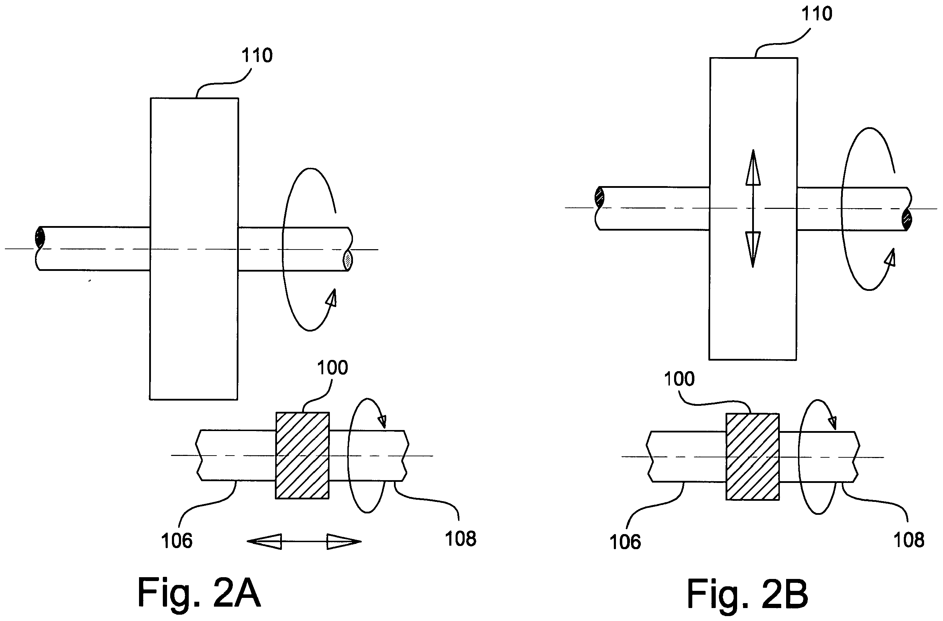

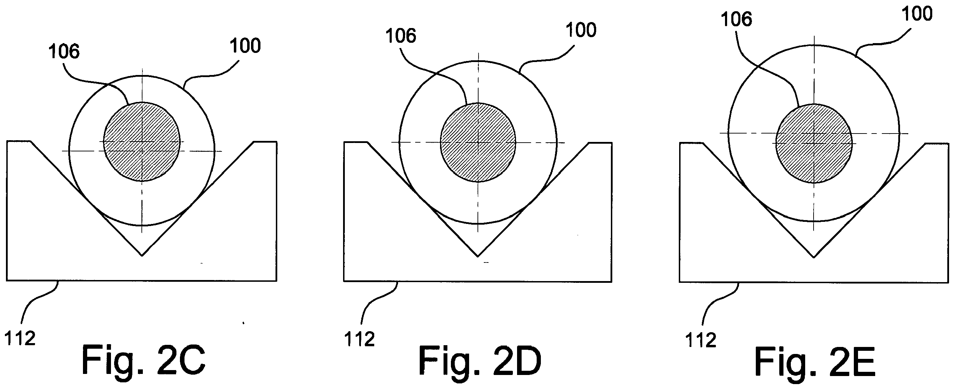

According to another manufacturing cycle, carried out firstly on special grinding machines and then on conventional machines for shaping the disc-shaped elements, it is on the other hand possible to grind the disc-shaped elements themselves completely in a single operative step, as illustrated in the attached figures 2A-2E. Current grinding machines indeed make it possible to completely grind the cylindrical surface of the disc-shaped element 100, since the gripping system of such machines is made up of two opposite gripping shafts 106 and 108 which block the disc-shaped element 100 by pressure, acting onto its two opposite and parallel surfaces. In such a way it is possible to avoid the waste of material caused by the first manufacturing cycle mentioned above.

The machining of the disc-shaped element 100 thus occurs through the use of a grinding wheel 110 that is set in rotation. Also the disc-shaped element 100 is set in rotation. The relative movement between the disc-shaped element 100 and the grinding wheel 110 can be of the axial type (figure 2A) or radial type (figure 2B). The following machining step of the ground disc-shaped element 100 is finally carried out on conventional shaping machines.

Also this second machining method however, has some drawbacks. A first drawback occurs in the loading step of the disc-shaped elements 100 onto the grinding machine. Such disc-shaped elements 100, before being blocked by the gripping shafts 106 and 108, are arranged by fall on a V-shaped block 112 (figures 2C-2E). Due to the lack of homogeneity of their outer diameters, the disc-shaped elements 100 are not all arranged concentrically with respect to the axis of rotation of the gripping shafts 106 and 108. In such a way, the amount of material removed during the grinding operation is not uniform, with consequent possibility of different surface finishing and/or incorrect grinding operation due to the movement of the disc-shaped element 100 with respect to the gripping shafts 106 and 108.

The grinding operation through diamond wheel also has problems due to the fact that the material removed is incorporated on the surface of the wheel itself, considerably and quickly reducing its capability of removing such material. The grinding operation through diamond wheel moreover leads to a poor surface finishing of the disc-shaped element.

Document DE 732 672 C illustrates a machine for manufacturing buttons according to the preamble of claim 1. This machine for manufacturing buttons is provided with a self-centering positioning system of the disc-shaped elements. Such a self-centering positioning system of the disc-shaped elements does not appear however, to operate with the same effectiveness when machining disc-shaped elements with diameters that are different from one another. In other words, such a self-centering positioning system of the disc-shaped elements is not particularly rapid and precise in adapting to disc-shaped elements with diameters that are different from one another. A further machine for manufacturing buttons according to the prior art is described, for example, in patent document DE 24 46 791 A1.

The purpose of the present invention is therefore that of making a machine for manufacturing buttons, in particular a machine that is capable of grinding the semi-finished components (disc-shaped elements), from which such buttons are obtained, that is capable of solving the aforementioned drawbacks of the prior art in an extremely simple, cost-effective, and particularly functional manner.

In detail, one purpose of the invention is that of making a machine for manufacturing buttons that is capable of making the amount of material removed from the disc-shaped element homogeneous during the grinding operation of the disc-shaped element itself. This purpose is obtained by means of a self-centering positioning system of the disc-shaped element and it is particularly important in the case in which buttons that are manufactured from precious materials are machined.

Another purpose of the invention is that of making a machine for manufacturing buttons that is capable of carrying out a grinding operation that is particularly precise on the disc-shaped elements, so as to consequently be able to obtain homogeneous surface finishings on the buttons that derive.

A further purpose of the invention is that of making a machine for manufacturing buttons that is provided with a machining tool that is particularly precise and capable of keeping its capabilities of removal of the material in the grinding step unaltered over time.

These purposes according to the present invention are achieved by making a machine for manufacturing buttons, in particular a machine that is capable of grinding the semi-finished components (disc-shaped elements) from which such buttons are obtained, as outlined in claim 1.

Further characteristics of the invention are highlighted in the dependent claims, which are an integrating part of the present description.

The characteristics and the advantages of a machine for manufacturing buttons according to the present invention shall become clearer from the following description, given as an example and not for limiting purposes, with reference to the attached schematic drawings, in which:
figures 1A-1D are section views of a detail of a first type of machine for manufacturing buttons according to the prior art;
figures 2A-2B are section views of a detail of a second type of machine for manufacturing buttons according to the prior art;
figures 2C-2E are section views of a further detail of the machine for manufacturing buttons of figures 2A-2B;
figure 3 is a perspective view of a preferred embodiment of the machine for manufacturing buttons according to the present invention;
figure 4 is a plan view from above of the group made up of a machining device and of a clamp device of the machine of figure 3;
figure 5 is a side elevation view of the machining device of the machine of figure 3;
figure 6 is a section view, obtained along the line VI-VI of figure 5, of the machining device of the machine of figure 3;
figure 7 is a front view of the self-centering positioning system of the disc-shaped elements of the machine of figure 3;
figure 8 is a section view, obtained along the line VIII-VIII of figure 7, of the self-centering positioning system of the disc-shaped elements of the machine of figure 3;
figure 9 is a rear view of the self-centering positioning system of the disc-shaped elements of the machine of figure 3;
figure 10 is a section view, obtained along the line X-X of figure 8, of the self-centering positioning system of the disc-shaped elements of the machine of figure 3;
figure 11 is a side elevation view of the clamp device of the machine of figure 3;
figure 12 is a section view, obtained along the line XII-XII of figure 11, of the clamp device of the machine of figure 3;
figure 13 is a partial side elevation view of a second embodiment of the machine for manufacturing buttons of the present invention;
figure 14 is a section view, obtained along the line XIV-XIV of figure 13, of the machine of figure 13;
figure 15 is a partial side elevation view of the machine of figure 13;
figure 16 is a section view, obtained along the line XVI-XVI of figure 15, of the machine of figure 13; and
figure 17 is a section view of the self-centering positioning system of the disc-shaped elements of the machine of figure 13.

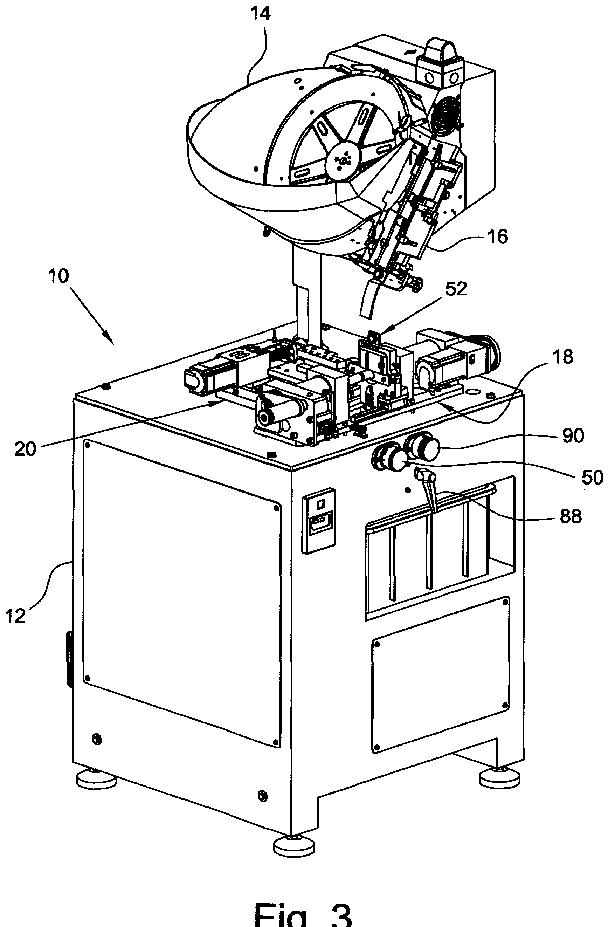

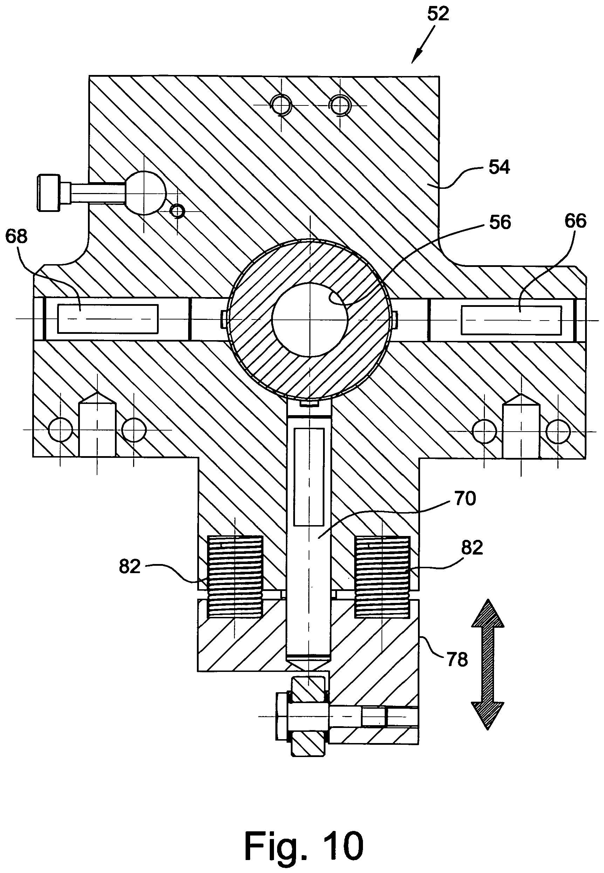

With reference in particular to figures 3 to 12, these show a first embodiment of a machine for manufacturing buttons according to the present invention, wholly indicated with reference numeral 10.

The machine 10 firstly comprises a base 12 on which all the machining units of the machine 10 itself are supported. First of all, a container device 14 of the known hopper type for a plurality of disc-shaped elements 100 that must be ground before the final transformation into buttons, is supported on the base 12.

A supplying device 16, that is operatively connected to the container device 14, selectively supplies, by fall through a spring channel (not shown), a single disc-shaped element 100 at a time to a clamp gripping device 18. The clamp gripping device 18, fixed to the base 12, is capable of holding such a single disc-shaped element 100 and making it rotate while a machining device 20, also fixed to the base 12 and arranged adjacent to the clamp gripping device 18, carries out the necessary machining, in this case the grinding of the cylindrical surface or circumferential edge of the disc-shaped element 100 itself.

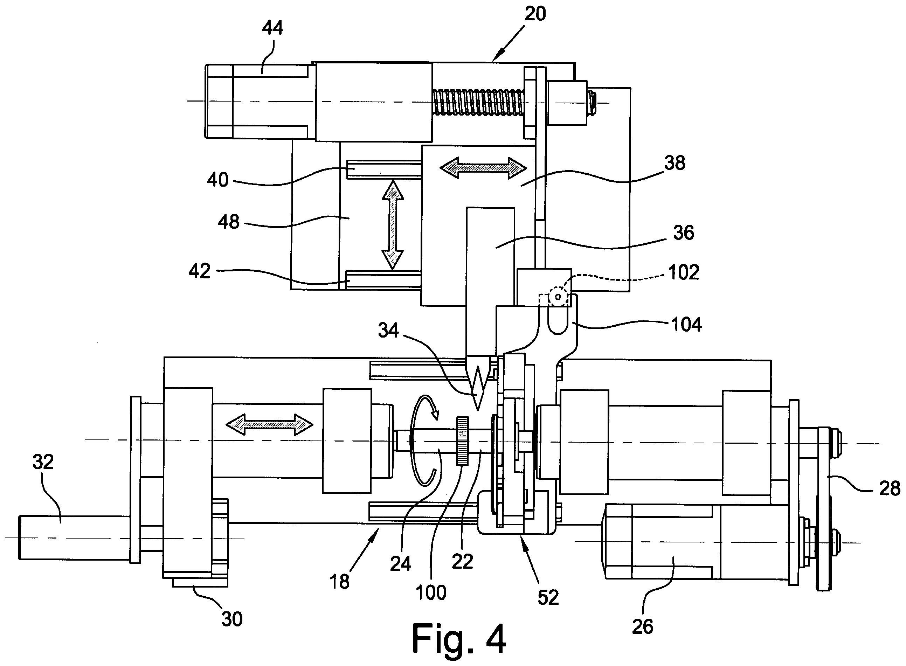

In detail, as shown in figure 4, the clamp gripping device 18 is of the type made up of two opposite and coaxial gripping shafts 22 and 24 which block the disc-shaped element 100 by pressure, acting onto its two opposite and parallel surfaces. A first shaft 22 is motorised and is set in rotation by an electric motor 26 by means of a corresponding transmission belt 28. The second shaft 24 is, on the other hand, provided with a closing piston 30 that is capable of making such a second shaft 24 translate axially towards or away with respect to the first shaft 22 according to the operative step that the clamp gripping device 18 is in. A handwheel 32 for adjusting the closure thickness of the two gripping shafts 22 and 24 is finally operatively connected to the closing piston 30.

Again with reference to figure 4, the machining device 20 is provided with a machining tool 34 that is mounted on a corresponding supporting base 36. The supporting base 36 is in turn fixed to a translation carriage 38 that is capable of moving with rectilinear motion along a direction that is substantially parallel to the axis of the gripping shafts 22 and 24 of the clamp gripping device 18. The translation carriage 38 is indeed mounted on linear sliding guides 40, 42 and is actuated by a respective translation motor 44. In such a way it is possible to correctly position the machining tool 34 with respect to the circumferential edge of the disc-shaped element 100, held by the clamp gripping device 18.

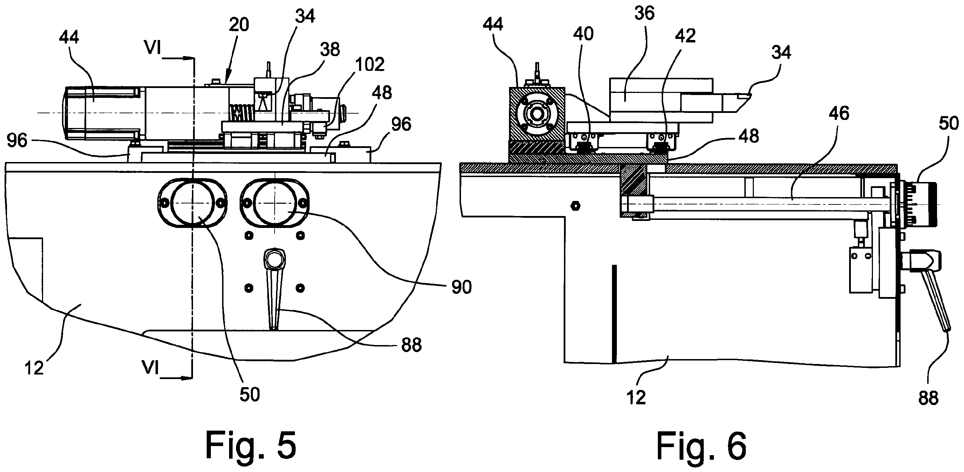

The working diameter of the machine 10, that is to say the uniform diameter which will be assigned to the disc-shaped elements 100 following the grinding carried out by the machining device 20, can be adjusted through a corresponding adjustment screw 46, that can be rotatably fixed to the base 12. The adjustment screw 46 can be manipulated through a special adjustment handwheel 50 and is operatively connected to a carriage 48 for adjusting the diameter (figures 5 and 6). The carriage 48 for adjusting the diameter is arranged below the translation carriage 38 and bears, on it, the linear sliding guides 40, 42 on which such a translation carriage 38 moves. The carriage 48 for adjusting the diameter thus makes it possible to move the machining tool 34 along a direction that is substantially perpendicular to the axis of the gripping shafts 22 and 24 of the clamp gripping device 18.

Once the desired working diameter of the machine 10 has been set, the carriage 48 for adjusting the diameter must be prevented to move along the respective sliding guides 96. The carriage 48 for adjusting the diameter is thus provided with corresponding springs (not shown), that are arranged between such sliding guides 96 and such a carriage 48, which ensure the blockage of the carriage 48 itself during the machining steps of the disc-shaped elements 100.

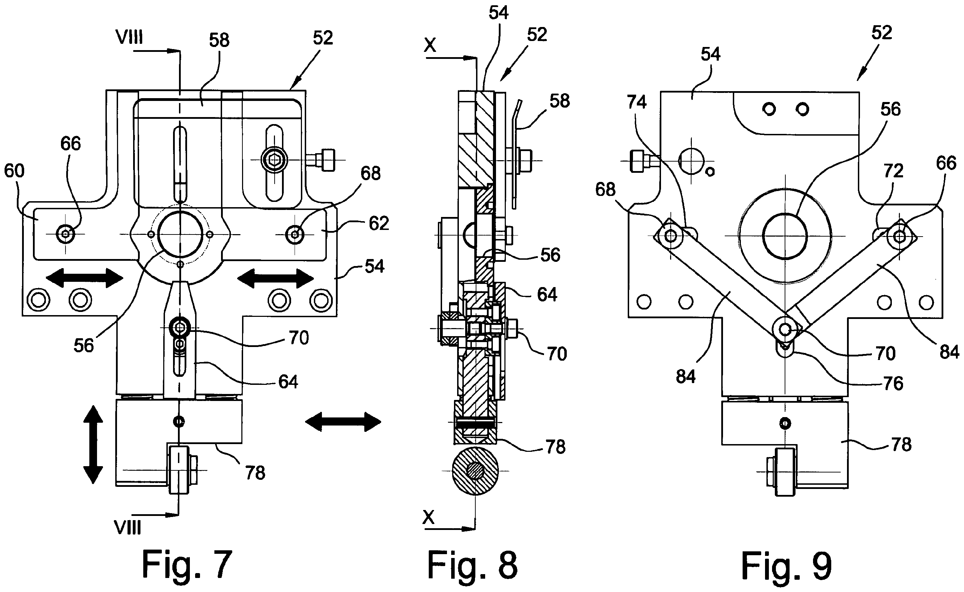

According to the invention, the clamp gripping device 18 is provided with a self-centering positioning system 52 of the disc-shaped elements 100 (figures 7-10), arranged below the supplying device 16 and connected to it by means of a spring channel, which is capable of positioning each disc-shaped element 100, independently from its outer diameter, substantially coaxially with respect to the gripping shafts 22 and 24 opposite the clamp gripping device 18 itself.

As shown in figures 7-10, the self-centering positioning system 52 comprises a supporting plate 54 that is substantially vertical and arranged perpendicularly with respect to the axis of the gripping shafts 22 and 24 opposite the clamp gripping device 18. The supporting plate 54 is provided with a circular through hole 56 which allows one of the gripping shafts of the clamp gripping device 18, in this case the first motorised shaft 22, to cross such a supporting plate 54 in the blocking step of the disc-shaped element 100.

On the front surface of the supporting plate 54 holding walls 58, 60 and 62 are applied, which are capable of housing each disc-shaped element 100 that is supplied by fall by the supplying device 16, as well as being capable of guiding such a disc-shaped element 100 towards a stop means 64. In detail, an upper holding wall 58 and two lateral holding walls 60 and 62 are provided, said upper holding wall 58 being arranged above the hole 56 and said two lateral holding walls 60 and 62 being arranged respectively on the left and on the right of such a hole 56, whereas the stop means 64 is arranged below such a hole 56 (figure 7).

Both the lateral holding walls 60 and 62, and the stop means 64 are respectively mounted on pins 66, 68 and 70 that are mobile with a linear motion along respective guiding slots 72, 74 and 76 (figure 9) obtained in the supporting plate 54. The movement of the pins 66, 68 and 70 and, as a consequence, of the lateral holding walls 60 and 62 and of the stop means 64 is obtained through an actuating mechanism 78 arranged below the supporting plate 54.

Operatively, each disc-shaped element 100 to be ground is made to fall in the self-centering positioning system 52 by the supplying device 16 through the spring channel. The disc-shaped element 100 is guided by the holding walls 58, 60 and 62 until it stops on the stop means 64. During the fall, the upper holding wall 58 prevents the disc-shaped element 100 from coming out from the lateral holding walls 60 and 62.

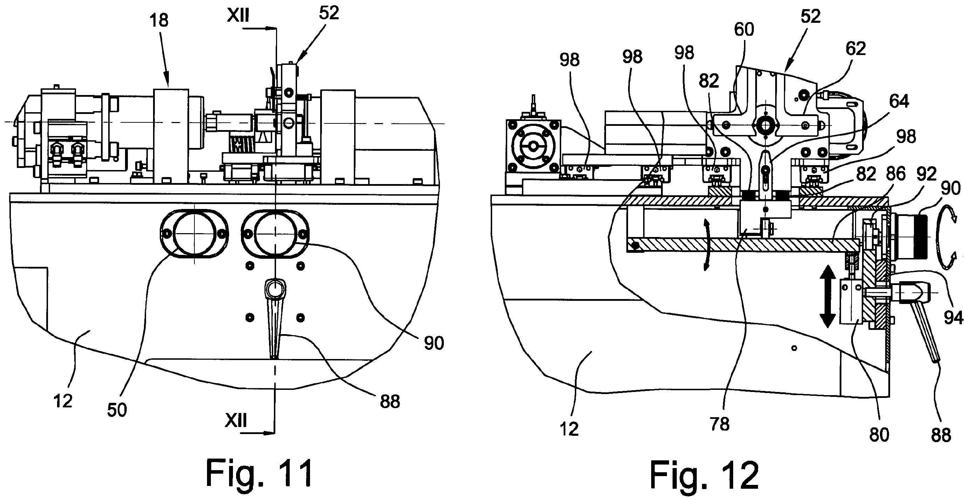

When the disc-shaped element 100 stops on the stop means 64, its position is ensured by the opposite gripping shafts 22 and 24 of the clamp gripping device 18, which are open in this step. At this stage, the control pneumatic cylinder 80 (figure 12) of the self-centering positioning system 52 returns, allowing the actuating mechanism 78 to drop by means of the relative closing springs 82. During this movement the stop means 64 moves downwards and, simultaneously, the lateral holding walls 60 and 62 close moving horizontally towards one another.

Thanks to the V shape of the terminal ends of the lateral holding walls 60 and 62, the disc-shaped element 100 is positioned concentrically with respect to the gripping shafts 22 and 24. The centring is ensured by a pair of dragging tie rods 84 that are arranged on the rear surface of the supporting plate 54 (figure 9). Each of the dragging tie rods 84 connects the pin 70 of the stop means 64 with one of the pins 66 and 68 of the lateral holding walls 60 and 62, so as to guarantee a symmetric closing movement of such lateral holding walls 60 and 62 around the disc-shaped element 100.

The self-centering positioning system 52 is actuated to be opened by the control pneumatic cylinder 80, which acts onto a lever 86. The lever 86 moves the actuating mechanism 78. It is possible to modify the axial position of the lever 86 by unscrewing the blocking handwheel 88 and acting upon the adjustment handwheel 90 that, by means of an eccentric 92, moves the support 94 of the control pneumatic cylinder 80 and, as a consequence, the control pneumatic cylinder 80 itself.

In such a way, it is possible to change the opening position of the lateral holding walls 60 and 62 and to adapt it, within a certain range, to the dimensions of the disc-shaped elements 100 being machined. Beyond a certain measure, it is necessary to remove such lateral holding walls 60 and 62, and replace them with longer or shorter walls.

The self-centering positioning system 52 of the disc-shaped elements 100 is in turn provided with linear sliding guides 98 (figure 12) which allow such self-centering positioning system 52 to move linearly and parallel with respect to the machining device 20. The movement of the self-centering positioning system 52 is made by means of a pin 102 (figure 4), that is fixed with the translation carriage 38 of the machining device 20, which couples with a corresponding fork 104, that is fixed to the self-centering positioning system 52 of the clamp gripping device 18.

The work cycle of the machine 10 for manufacturing buttons according to the present invention can therefore be summarised as follows:
1. falling of the disc-shaped element 100 in the gripping area of the self-centering positioning system 52 belonging to the clamp gripping device 18;
2. closing of the self-centering positioning system 52 around the disc-shaped element 100;
3. closing of the gripping shafts 22 and 24 of the clamp gripping device 18 on the two opposite surfaces of the disc-shaped element 100;
4. opening of the self-centering positioning system 52 around the disc-shaped element 100;
5. setting the disc-shaped element 100 in rotation, activating the electric motor 26 of the first motorised shaft 22;
6. simultaneous movement of the self-centering positioning system 52 and of the machining device 20 with respect to the disc-shaped element 100 so as to bring the machining tool 34 in contact with the circumferential edge of the disc-shaped element 100 and carry out the grinding thereof. While the machining tool 34 machines the disc-shaped element 100, the self-centering positioning system 52 moves allowing the disc-shaped element to fall freely in the following step 8;
7. stopping the rotation of the disc-shaped element 100;
8. opening of the gripping shafts 22 and 24 of the clamp gripping device 18 and consequent discharge of the disc-shaped element 100 and simultaneous falling of a new disc-shaped element 100;
9. returning in resting position of the machining tool 34 and of the self-centering positioning system 52, with consequent fall of the disc-shaped element 100 in the gripping area of the self-centering positioning system 52.

Preferably, in order to keep its capability of removing material unaltered over time, and in order to improve the surface finishing of the edges of the disc-shaped elements 100, the machining tool 34 is made up, instead of by a diamond wheel, by a single cutting tool that is capable of grinding the circumferential edge of each disc-shaped element 100 by chip removal. The single cutting tool is of the type used in normal lathes for mechanical machining.

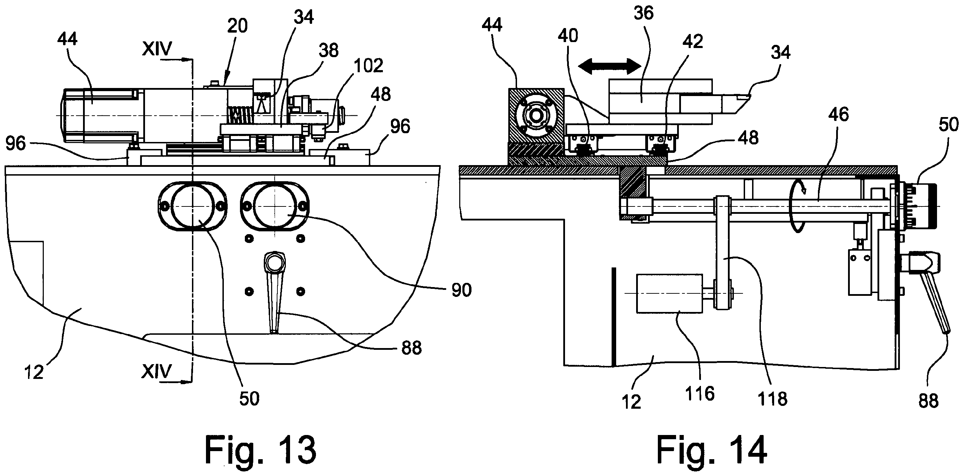

With reference now to figures 13 and 14, these show a second embodiment of the machine 10 for manufacturing buttons of the present invention. In this second embodiment the adjustment screw 46 of the machining device 20 is provided with motorised means that are configured so as to automatically modify the working diameter of the machine 10 (figure 14). In particular, the adjustment screw 46 can be set in rotation by a corresponding motorized handling system 116, like for example an electric motor, through a corresponding transmission belt 118. Such a motorized handling system 116 is therefore capable of moving the carriage 48 for adjusting the diameter applied to the machining device 20.

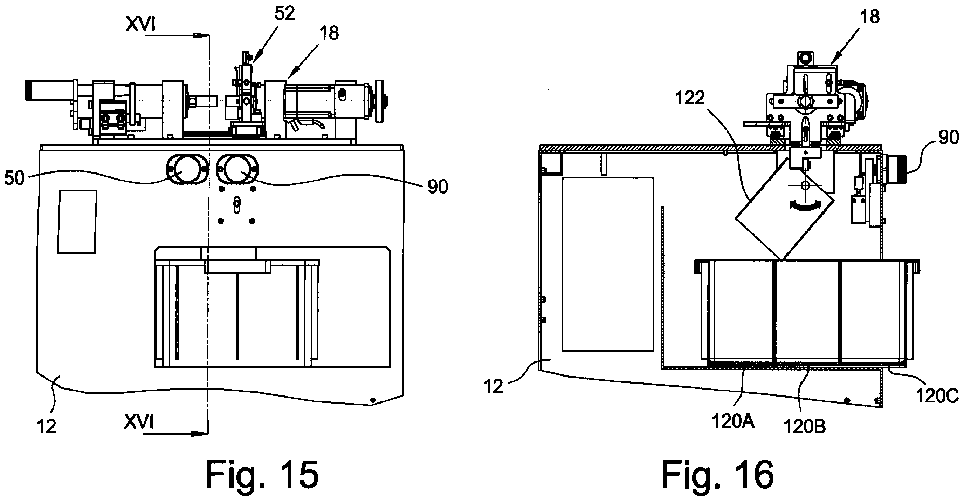

As shown in figure 16, the machine 10 can also be provided, in its base 12 and below the clamp gripping device 18, with a plurality of separated areas 120A-120C for collecting the machined disc-shaped elements 100. A device 122 for selecting the falling area, which is rotatably connected below the clamp gripping device 18, is capable of selectively sending the machined disc-shaped elements 100 in a determined collecting area 120A-120C. The device 122 for selecting the falling area can be, for example, made up of a mobile wall actuated by a pneumatic piston or by a small electric motor.

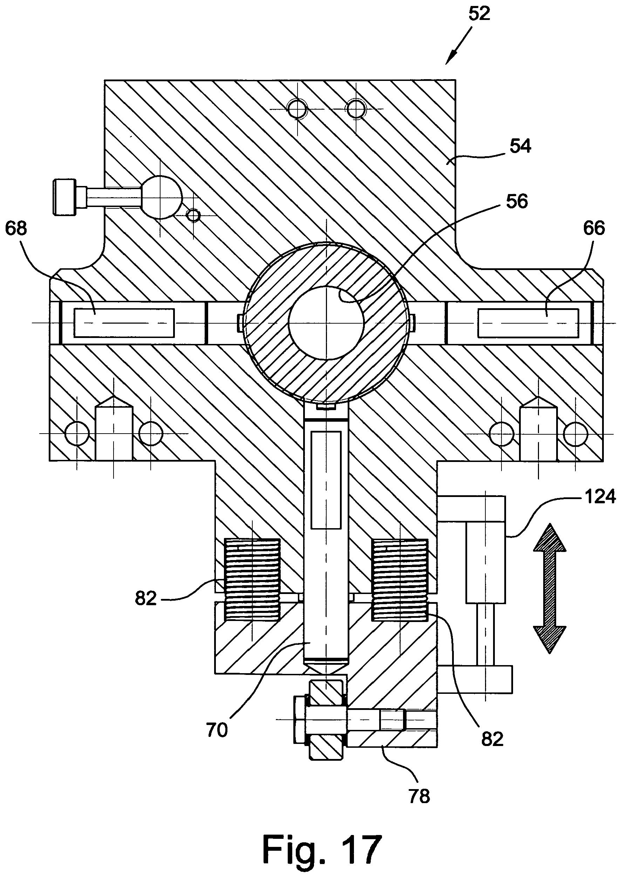

Figure 17 finally shows a self-centering positioning system 52 that is provided with a device 124 that is capable of detecting the diameter of each disc-shaped element 100 to be machined on the machine 10. The device 124 can be of the mechanical, inductive, optical type, or of another type and can be configured so as to detect the stroke of at least one of the pins 66, 68 and 70 and, therefore, the diameter of the disc-shaped element 100 that will be machined. As an alternative, the device 124 can be made up of a video camera or of an analogous device that is capable of directly measuring the diameter of the disc-shaped element 100 that will be machined.

In the case in which the self-centering positioning system 52 has the device 124 that is capable of detecting the diameter of the disc-shaped element 100, the machining cycle of the machine 10 for manufacturing buttons could be summarised as follows:
1. falling of the disc-shaped element 100 in the gripping area of the self-centering positioning system 52 belonging to the clamp gripping device 18;
2. closing of the self-centering positioning system 52 around the disc-shaped element 100;
3. closing of the gripping shafts 22 and 24 of the clamp gripping device 18 on the two opposite surfaces of the disc-shaped element 100;
   3.1. measuring of the diameter of the disc-shaped element 100;
   3.2. positioning of the machining tool 34 based upon the diameter to be obtained;
   3.3. positioning of the device 122 for selecting the falling area based upon the diameter to be obtained;
4. opening of the self-centering positioning system 52 around the disc-shaped element 100;
5. placing the disc-shaped element 100 in rotation, activating the electric motor 26 of the first motorised shaft 22;
6. simultaneous movement of the self-centering positioning system 52 and of the machining device 20 with respect to the disc-shaped element 100 for bringing the machining tool 34 in contact with the circumferential edge of the disc-shaped element 100 and obtaining the grinding thereof. While the machining tool 34 machines the disc-shaped element 100, the self-centering positioning system 52 moves, allowing the disc-shaped element to fall freely in the following step 8;
7. stopping of the rotation of the disc-shaped element 100;
8. opening of the gripping shafts 22 and 24 of the clamp gripping device 18 and consequent discharge of the disc-shaped element 100 and simultaneous falling of a new disc-shaped element 100;
9. return of the machining tool 34 and of the self-centering positioning system 52 to the resting position, with consequent fall of the disc-shaped element 100 in the gripping area of the self-centering positioning system 52.

Steps 3.2 and 4 start simultaneously at the end of step 3.1. Step 3.3 can occur at any moment between the end of step 3.1 and the start of step 8. Step 6 begins if step 3.2 has finished. Step 8 begins if step 3.3 has finished.

A machine 10 with these characteristics would have the further advantage of being able to grind disc-shaped elements 100 having different diameters, obtaining ground disc-shaped elements 100 having once again different diameters so as to be able to remove the smallest amount of material possible. In addition, the device 124 that is capable of detecting the diameter of each disc-shaped element 100 can be operatively connected to the motorized handling system 116 of the adjustment screw 46, so that the position of the carriage 48 for adjusting the diameter can be defined according to the measure of the diameter detected by such a device 124.

For example, all the disc-shaped elements 100 having a diameter of between 21 mm and 22 mm can be ground to 20 mm, all the disc-shaped elements 100 having a diameter of between 22 mm and 23 mm can be ground to 21 mm and all the disc-shaped elements 100 with a diameter of between 23 mm and 24 mm can be ground to 22 mm. The three types of ground disc-shaped elements 100 can thus be separated into three distinct collection areas 120A, 120B and 120C.

It has thus been seen that the machine for manufacturing buttons according to the present invention achieves the purposes that were previously highlighted.

The machine for manufacturing buttons of the present invention thus conceived can in any case undergo numerous modifications and variants, all covered by the same inventive concept; moreover, all the details can be replaced by technically equivalent elements. In practice, the materials used, as well as the shapes and dimensions, can be any according to the technical requirements.

The scope of protection of the invention is therefore defined by the attached claims.

## Claims

1. Machine (10) for manufacturing buttons comprising:
- a base (12);
- a container device (14), supported on the base (12), capable of containing a plurality of disc-shaped elements (100) to be machined on the machine (10);
- a supplying device (16), operatively connected to the container device (14), capable of selectively supplying, by fall through a channel, a single disc-shaped element (100) at a time to a clamp gripping device (18);
- a clamp gripping device (18), fixed to the base (12), provided with two opposite and coaxial gripping shafts (22, 24), which block said disc-shaped element (100) by pressure, acting onto its two opposite and parallel surfaces, and set it into rotation;
- a machining device (20), fixed to the base (12) and arranged adjacent to the clamp gripping device (18), capable of machining the outer circumferential edge of said disc-shaped element (100) held and made to rotate by said clamp gripping device (18); and
- a self-centering positioning system (52) of the disc-shaped elements (100), arranged on the clamp gripping device (18) below the supplying device (16), capable of positioning each disc-shaped element (100), independently from its outer diameter, substantially coaxially with respect to the opposite gripping shafts (22, 24) of said clamp gripping device (18),
the machine (10) being **characterised in that** said self-centering positioning system (52) comprises a supporting plate (54) substantially vertical and arranged perpendicularly to the axis of the gripping shafts (22, 24), said supporting plate (54) being provided with a circular through hole (56) which allows one of said gripping shafts (22) to cross said supporting plate (54) in the blocking step of the disc-shaped element (100), on the front surface of the supporting plate (54) being applied an upper holding wall (58), arranged above said circular through hole (56), and two lateral holding walls (60, 62), arranged respectively on the left and on the right of said circular through hole (56), capable of receiving each disc-shaped element (100) that is supplied by fall by the supplying device (16), as well as capable of guiding said disc-shaped element (100) towards a stop means (64) arranged below said circular through hole (56), wherein both the lateral holding walls (60, 62), and the stop means (64) are mounted on respective pins (66, 68; 70) mobile with a linear motion along respective guiding slots (72, 74; 76) obtained in the supporting plate (54), the movement of said pins (66, 68; 70) and, as a consequence, of the lateral holding walls (60, 62) and of the stop means (64) being obtained through an elastic actuating mechanism (78) arranged below said supporting plate (54).

2. Machine (10) according to claim 1, **characterised in that** the lateral holding walls (60, 62) are provided with V-shaped terminal ends, so as to place the disc-shaped element (100) concentrically with respect to the gripping shafts (22, 24).

3. Machine (10) according to claim 1, **characterised in that** on the rear surface of the supporting plate (54) a pair of dragging tie rods (84) is provided, which connects respectively the pin (70) of the stop means (64) with each of the pins (66, 68) of the lateral holding walls (60, 62), so as to guarantee a symmetric closing movement of said lateral holding walls (60, 62) around the disc-shaped element (100).

4. Machine (10) according to any one of claims 1 to 3, **characterised in that** both the lateral holding walls (60, 62), and the stop means (64) are actuated by a control pneumatic cylinder (80), which acts onto a lever (86) which moves in turn said elastic actuating mechanism (78).

5. Machine (10) according to claim 4, **characterised in that** the control pneumatic cylinder (80) is operatively connected to an eccentric (92) capable of modifying the axial position of the lever (86), so as to change the opening position of the lateral holding walls (60, 62), adapting it to the size of the disc-shaped elements (100) being machined.

6. Machine (10) according to any one of the preceding claims, **characterised in that** said self-centering positioning system (52) is provided with a device (124) capable of detecting the diameter of each disc-shaped element (100) to be machined on the machine (10).

7. Machine (10) according to claim 6, **characterised in that** it comprises, below the clamp gripping device (18), a plurality of separated areas (120A-120C) for collecting the machined disc-shaped elements (100), a selecting device (122), rotatably connected below said clamp gripping device (18), being capable of selectively sending said disc-shaped elements (100) machined in a determined collecting area (120A-120C).

8. Machine (10) according to any one of the preceding claims, **characterised in that** the machining device (20) is provided with a machining tool (34) mounted on a supporting base (36) mobile with a linear motion in order to be capable of correctly placing said machining tool (34) with respect to the circumferential edge of the disc-shaped element (100) held by the clamp gripping device (18).

9. Machine (10) according to claim 8, **characterised in that** said supporting base (36) is fixed to a translation carriage (38) mounted on linear sliding guides (40, 42), said translation carriage (38) being actuated by a respective translation motor (44) in order to move with a rectilinear motion along a direction substantially parallel to the axis of the gripping shafts (22, 24) of the clamp gripping device (18).

10. Machine (10) according to claim 9, **characterised in that** the machining device (20) comprises a carriage (48) for adjusting the diameter, mobile with a linear motion along respective sliding guides (96) and operatively connected to said translation carriage (38) in order to move the machining tool (34) along a direction substantially perpendicular to the axis of said gripping shafts (22, 24), so as to be capable of setting the uniform diameter which will be assigned to the disc-shaped elements (100) further to the machining operations on the machine (10).

11. Machine (10) according to claim 10, **characterised in that** the carriage (48) for adjusting the diameter is provided with a motorized handling system (116) which permits to adjust the position of said carriage (48) for adjusting the diameter according to the measure detected by the device (124) capable of detecting the diameter of each disc-shaped element (100) to be machined on the machine (10).

12. Machine (10) according to any one of claims 8 to 11, **characterised in that** the self-centering positioning system (52) is provided with linear sliding guides (98) which allow said self-centering positioning system (52) to move linearly and parallel with respect to the machining device (20).

13. Machine (10) according to any one of claims 8 to 12, **characterised in that** the machining tool (34) is made of a single cutting tool capable of grinding the circumferential edge of each disc-shaped element (100) by chip removal.

## Patentansprüche

1. Maschine (10) zum Herstellen von Knöpfen, umfassend:
- ein Gestell (12);
- eine Behältervorrichtung (14), die auf dem Gestell (12) gelagert und in der Lage ist, mehrere, auf der Maschine (10) zu bearbeitende, scheibenförmige Elemente (100) aufzunehmen;
- eine Zufuhrvorrichtung (16), die mit der Behältervorrichtung (14) wirkverbunden und in der Lage ist, jeweils ein einzelnes scheibenförmiges Element (100) durch Fallen durch einen Kanal einer Klammergreifvorrichtung (18) selektiv zuzuführen;
- eine Klammergreifvorrichtung (18), die an dem Gestell (12) befestigt und mit zwei gegenüberliegenden, koaxialen Greifwellen (22, 24) versehen ist, die das scheibenförmige Element (100) durch Druck blockieren, wobei sie auf seine gegenüberliegenden, parallelen Flächen wirken und es in Drehung versehen;
- eine Bearbeitungsvorrichtung (20), die auf dem Gestell (12) befestigt und an die Klammergreifvorrichtung (18) angrenzend angeordnet und in der Lage ist, den äußeren, peripheren Rand des scheibenförmigen Elements (100) zu bearbeiten, das von der Klammergreifvorrichtung (18) gehalten und in Drehung versetzt wird; und
- ein System zur selbstzentrierenden Positionierung (52) des scheibenförmigen Elements (100), das auf der Klammergreifvorrichtung (18) unterhalb der Zufuhrvorrichtung (16) angeordnet und in der Lage ist, jedes scheibenförmige Element (100) unabhängig von seinem Außendurchmesser im Wesentlichen koaxial in Bezug auf die gegenüberliegenden Greifwellen (22, 24) der Klammergreifvorrichtung (18) zu positionieren,
wobei die Maschine (10) **dadurch gekennzeichnet ist, dass** das selbstzentrierende Positionierungssystem (52) eine im Wesentlichen vertikale und senkrecht zur Achse der Greifwellen (22, 24) angeordnete Trägerplatte (54) umfasst, wobei die Trägerplatte (54) mit einem kreisförmigen Durchgangsloch (56) versehen ist, welches es einer der Greifwellen (22) erlaubt, die Trägerplatte (54) im Blockierschritt des scheibenförmigen Elements (100) zu durchqueren, wobei auf der vorderen Fläche der Trägerplatte (54) eine obere Haltewand (58) angelegt wird, die oberhalb des kreisförmigen Durchgangsloches (56) angeordnet ist und wobei zwei seitliche Haltewände (60, 62), die jeweils links und rechts des kreisförmigen Durchgangsloches (56) angeordnet sind, in der Lage sind, jedes scheibenförmige Element (100) aufzunehmen, das durch Herunterfallen durch die Zufuhrvorrichtung (16) zugeführt wird, und außerdem in der Lage sind, das scheibenförmige Element (100) zu einer Anschlageinrichtung (64) zu führen, die unterhalb des kreisförmigen Durchgangsloches (56) angeordnet ist, wobei die beiden seitlichen Haltewände (60, 62) und die Anschlageinrichtung (64) auf jeweiligen Stiften (66, 68; 70) befestigt sind, die mit einer linearen Bewegung längs jeweiliger Führungsschlitze (72, 74; 76) bewegbar sind, die auf der Trägerplatte (54) herausgearbeitet sind, wobei die Bewegung der Stifte (66, 68; 70) und folglich der seitlichen Haltewände (60, 62) und der Anschlageinrichtung (64) durch einen elastischen Betätigungsmechanismus (78) erzielt wird, der unterhalb der Trägerplatte (54) angeordnet ist.

2. Maschine (10) nach Anspruch 1, **dadurch gekennzeichnet, dass** die seitlichen Haltewände (60, 62) mit V-förmigen Anschlussenden versehen sind, um das scheibenförmige Element (100) in Bezug auf die Greifwellen (22, 24) konzentrisch zu positionieren.

3. Maschine (10) nach Anspruch 1, **dadurch gekennzeichnet, dass** auf der hinteren Fläche der Trägerplatte (54) ein Paar von Zugstangen (84) vorgesehen ist, welches den Stift (70) der Anschlageinrichtung (64) jeweils mit jedem der Stiften (66, 68) der seitlichen Haltewände (60, 62) verbindet, um eine symmetrische Schließbewegung der seitlichen Haltewände (60, 62) rund um das scheibenförmige Element (100) zu gewährleisten.

4. Maschine (10) nach einem beliebigen der Ansprüche 1 bis 3, **dadurch gekennzeichnet, dass** die beiden seitlichen Haltewände (60, 62) und die Anschlageinrichtung (64) von einem pneumatischen Steuerzylinder (80) betätigt werden, der auf einen Hebel (86) wirkt, welcher seinerseits den elastischen Betätigungsmechanismus (78) bewegt.

5. Maschine (10) nach Anspruch 4, **dadurch gekennzeichnet, dass** der pneumatische Steuerzylinder (80) mit einem Exzenter (92) wirkverbunden ist, der in der Lage ist, die axiale Stellung des Hebels (86) so zu verändern, dass die Öffnungsstellung der seitlichen Haltewände (60, 62) verändert und an die Größe des zu bearbeitenden, scheibenförmigen Elements (100) angepasst wird.

6. Maschine (10) nach einem beliebigen der vorstehenden Ansprüche, **dadurch gekennzeichnet, dass** das selbstzentrierende Positionierungssystem (52) mit einer Vorrichtung (124) versehen ist, die in der Lage ist, den Durchmesser eines jeden scheibenförmigen Elements (100) zu erfassen, das auf der Maschine (10) bearbeitet werden soll.

7. Maschine (10) nach Anspruch 6, **dadurch gekennzeichnet, dass** sie unterhalb der Klammergreifvorrichtung (18) mehrere, getrennte Bereiche (120A - 120C) zum Sammeln der bearbeiteten, scheibenförmigen Elemente (100) umfasst, wobei eine unterhalb der Klammergreifvorrichtung (18) drehbar verbundene Selektiervorrichtung (122) in der Lage ist, die bearbeiteten, scheibenförmigen Elemente (100) selektiv in einen bestimmten Sammelbereich (120A - 120C) zu senden.

8. Maschine (10) nach einem beliebigen der vorstehenden Ansprüche, **dadurch gekennzeichnet, dass** die Bearbeitungsvorrichtung (20) mit einem Bearbeitungswerkzeug (34) versehen ist, das auf einem Traggestell (36) befestigt ist, das in geradliniger Bewegung bewegbar ist, um das Bearbeitungswerkzeug (34) in Bezug auf den peripheren Rand des scheibenförmigen Elements (100), das von der Klammergreifvorrichtung (18) gehalten wird, korrekt zu positionieren.

9. Maschine (10) nach Anspruch 8, **dadurch gekennzeichnet, dass** das Traggestell (36) auf einem Translationsschlitten (38) befestigt ist, der auf Lineargleitführungen (40, 42) montiert ist, wobei der Translationsschlitten (38) von einem jeweiligen Translationsmotor (44) betätigt wird, um sich in einer geradlinigen Bewegung längs einer Richtung zu bewegen, die im Wesentlichen parallel zur Achse der Greifwellen (22, 24) der Klammergreifvorrichtung (18) liegt.

10. Maschine (10) nach Anspruch 9, **dadurch gekennzeichnet, dass** die Bearbeitungsvorrichtung (20) einen Schlitten (48) zum Anpassen des Durchmessers umfasst, der in einer geradlinigen Bewegung längs jeweiliger Gleitführungen (96) bewegbar ist und mit dem Translationsschlitten (38) wirkverbunden ist, um das Bearbeitungswerkzeug (34) längs einer Richtung zu bewegen, die im Wesentlichen senkrecht zur Achse der Greifwellen (22, 24) steht, um in der Lage zu sein, den einheitlichen Durchmesser einzustellen, der den scheibenförmigen Elementen (100) im Anschluss an die Bearbeitungsvorgänge auf der Maschine (10) zugewiesen wird.

11. Maschine (10) nach Anspruch 10, **dadurch gekennzeichnet, dass** der Schlitten (48) zum Anpassen des Durchmessers mit einem motorisierten Handhabungssystem (116) versehen ist, welches eine Justierung der Position des Schlittens (48) zum Anpassen des Durchmessers an das Maß erlaubt, das von der Vorrichtung (124) ermittelt wurde, welche in der Lage ist, den Durchmesser eines jeden auf der Maschine (10) zu bearbeitenden, scheibenförmigen Elements (100) zu ermitteln.

12. Maschine (10) nach einem beliebigen der Ansprüche 8 bis 11, **dadurch gekennzeichnet, dass** das selbstzentrierende Positionierungssystem (52) mit Lineargleitführungen (98) versehen ist, die es dem selbstzentrierenden Positionierungssystem (52) erlauben, sich geradlinig und parallel in Bezug auf die Bearbeitungsvorrichtung (20) zu bewegen.

13. Maschine (10) nach einem beliebigen der Ansprüche 8 bis 12, **dadurch gekennzeichnet, dass** das Bearbeitungswerkzeug (34) aus einem einzelnen Schneidewerkzeug besteht, das in der Lage ist, den peripheren Rand eines jeden scheibenförmigen Elements (100) spanabhebend zu schleifen.

## Revendications

1. Machine (10) pour la fabrication de boutons comprenant :
- une base (12) ;
- un dispositif conteneur (14), supporté sur la base (12), capable de contenir une pluralité d'éléments en forme de disque (100) à usiner sur la machine (10) ;
- un dispositif d'alimentation (16), connecté fonctionnellement au dispositif conteneur (14), capable d'alimenter sélectivement, par chute à travers un canal, un unique élément en forme de disque (100) à la fois à un dispositif de préhension par serrage (18) ;
- un dispositif de préhension par serrage (18), fixé à la base (12), équipé de deux arbres de préhension coaxiaux opposés (22, 24), qui bloquent ledit élément en forme de disque (100) par pression, en agissant sur ses deux surfaces opposées et parallèles, et le mettent en rotation ;
- un dispositif d'usinage (20), fixé à la base (12) et agencé adjacent au dispositif de préhension par serrage (18), capable d'usiner le bord circonférentiel extérieur dudit élément en forme de disque (100) maintenu et mis en rotation par ledit dispositif de préhension par serrage (18) ; et
- un système de positionnement à centrage automatique (52) des éléments en forme de disque (100), agencé sur le dispositif de préhension par serrage (18) au-dessous du dispositif d'alimentation (16), capable de positionner chaque élément en forme de disque (100), indépendamment de son diamètre extérieur, de manière sensiblement coaxiale par rapport aux arbres de préhension opposés (22, 24) dudit dispositif de préhension par serrage (18),
la machine (10) étant **caractérisée en ce que** ledit système de positionnement à centrage automatique (52) comprend une plaque de support (54) sensiblement verticale et agencée perpendiculairement à l'axe des arbres de préhension (22, 24), ladite plaque de support (54) étant pourvue d'un trou passant circulaire (56) qui permet à un desdits arbres de préhension (22) de traverser ladite plaque de support (54) dans l'étape de blocage de l'élément en forme de disque (100), sur la surface avant de la plaque de support (54) étant appliquées une paroi de retenue supérieure (58), agencée au-dessus dudit trou passant circulaire (56), et deux parois de retenue latérales (60, 62), agencées respectivement sur la gauche et sur la droite dudit trou passant circulaire (56), capables de recevoir chaque élément en forme de disque (100) qui est alimenté par chute par le dispositif d'alimentation (16), et capable également de guider ledit élément en forme de disque (100) vers un moyen d'arrêt (64) agencé au-dessous dudit trou passant circulaire (56), dans laquelle les deux parois de retenue latérales (60, 62) et le moyen d'arrêt (64) sont montés sur des broches respectives (66, 68 ; 70) mobiles avec un mouvement linéaire le long de fentes de guidage respectives (72, 74 ; 76) ménagées dans la plaque de support (54), le mouvement desdites broches (66, 68 ; 70) et, en conséquence, des parois de retenue latérales (60, 62) et du moyen d'arrêt (64) étant obtenu par le biais d'un mécanisme d'actionnement élastique (78) agencé au-dessous de ladite plaque de support (54).

2. Machine (10) selon la revendication 1, **caractérisée en ce que** les parois de retenue latérales (60, 62) sont munies d'extrémités terminales en forme de V, de manière à placer l'élément en forme de disque (100) de manière concentrique par rapport aux arbres de préhension (22, 24).

3. Machine (10) selon la revendication 1, **caractérisée en ce qu'**une paire de tirants d'entraînement (84) est disposée sur la surface arrière de la plaque de support (54), laquelle connecte respectivement la broche (70) du moyen d'arrêt (64) avec chacune des broches (66, 68) des parois de retenue latérales (60, 62), de manière à garantir un mouvement de fermeture symétrique desdites parois de retenue latérales (60, 62) autour de l'élément en forme de disque (100).

4. Machine (10) selon l'une quelconque des revendications 1 à 3, **caractérisée en ce que** les deux parois de retenue latérales (60, 62) et le moyen d'arrêt (64) sont actionnés par un cylindre pneumatique de commande (80), qui agit sur un levier (86) qui déplace à son tour ledit mécanisme d'actionnement élastique (78).

5. Machine (10) selon la revendication 4, **caractérisée en ce que** le cylindre pneumatique de commande (80) est connecté fonctionnellement à un excentrique (92) capable de modifier la position axiale du levier (86), de manière à changer la position d'ouverture des parois de retenue latérales (60, 62), en l'adaptant à la taille des éléments en forme de disque (100) qui sont usinés.

6. Machine (10) selon l'une quelconque des revendications précédentes, **caractérisée en ce que** ledit système de positionnement à centrage automatique (52) est équipé d'un dispositif (124) capable de détecter le diamètre de chaque élément en forme de disque (100) à usiner sur la machine (10).

7. Machine (10) selon la revendication 6, **caractérisée en ce qu'**elle comprend, au-dessous du dispositif de préhension par serrage (18), une pluralité de zones séparées (120A-120C) pour collecter les éléments en forme de disque usinés (100), un dispositif de sélection (122), connecté de manière rotative au-dessous dudit dispositif de préhension par serrage (18), étant capable d'envoyer de manière sélective lesdits éléments en forme de disque (100) usinés dans une zone de collecte déterminée (120A-120C).

8. Machine (10) selon l'une quelconque des revendications précédentes, **caractérisée en ce que** le dispositif d'usinage (20) est équipé d'un outil d'usinage (34) monté sur une base de support (36) mobile avec un mouvement linéaire de manière à être capable de positionner correctement ledit outil d'usinage (34) par rapport au bord circonférentiel de l'élément en forme de disque (100) maintenu par le dispositif de préhension par serrage (18).

9. Machine (10) selon la revendication 8, **caractérisée en ce que** ladite base de support (36) est fixé à un chariot de translation (38) monté sur des guides de coulissement linéaires (40, 42), ledit chariot de translation (38) étant actionné par un moteur de translation respectif (44) de manière à se déplacer avec un mouvement rectiligne suivant une direction sensiblement parallèle à l'axe des arbres de préhension (22, 24) du dispositif de préhension par serrage (18).

10. Machine (10) selon la revendication 9, **caractérisée en ce que** le dispositif d'usinage (20) comprend un chariot (48) pour le réglage du diamètre, mobile avec un mouvement linéaire le long de guides de coulissement respectifs (96) et connecté fonctionnellement audit chariot de translation (38) de manière à déplacer l'outil d'usinage (34) suivant une direction sensiblement perpendiculaire à l'axe desdits arbres de préhension (22, 24),de manière à être capable de régler le diamètre uniforme qui sera attribué aux éléments en forme de disque (100) ultérieurement aux opérations d'usinage sur la machine (10).

11. Machine (10) selon la revendication 10, **caractérisée en ce que** le chariot (48) pour le réglage du diamètre est équipé d'un système de manipulation motorisé (116) qui permet de régler la position dudit chariot (48) pour le réglage du diamètre en fonction de la mesure détectée par le dispositif (124) capable de détecter le diamètre de chaque élément en forme de disque (100) à usiner sur la machine (10).

12. Machine (10) selon l'une quelconque des revendications 8 à 11, **caractérisée en ce que** le système de positionnement à centrage automatique (52) est muni de guides de coulissement linéaire (98) qui permettent audit système de positionnement à centrage automatique (52) de se déplacer linéairement et parallèlement par rapport au dispositif d'usinage (20).

13. Machine (10) selon l'une quelconque des revendications 8 à 12, **caractérisée en ce que** l'outil d'usinage (34) est constitué d'un unique outil de coupe capable de meuler le bord circonférentiel de chaque élément en forme de disque (100) par enlèvement de copeaux.
